# EUROPÄISCHE PATENTSCHRIFT

(11) **EP 2 700 221 B1**
(45) Veröffentlichungstag und Bekanntmachung des Hinweises auf die Patenterteilung: **20.09.2017**
(21) Anmeldenummer: 12751272.1
(22) Anmeldetag: 23.04.2012
(51) Int. Cl.: G01B 11/25, H04N 13/02

(54) **VERFAHREN ZUM SYNCHRONISIERTEN BETRIEB EINER KAMERA UND EINES PROJEKTORS, SYSTEM ZUR ERZEUGUNG VON 3D BILDERN**
METHOD FOR OPERATING A CAMERA AND A PROJECTOR IN A SYNCHRONIZED MANNER, SYSTEM FOR GENERATING 3D IMAGES
PROCÉDÉ DE FONCTIONNEMENT SYNCHRONISÉ D'UNE CAMÉRA ET D'UN PROJECTEUR, SYSTÈME DE GÉNÉRATION D'IMAGES 3D

(30) Priorität: 21.04.2011 DE 102011018597
(43) Veröffentlichungstag der Anmeldung: 26.02.2014
(73) Patentinhaber: VRmagic GmbH, 68167 Mannheim (DE)
(72) Erfinder: SICHLER, Stefan, 68239 Mannheim (DE); MENKEN, Oliver, Mannheim 68165 (DE)
(74) Vertreter: Thews, Gustav
(86) Internationale Anmeldenummer: PCT/EP2012/057379
(87) Internationale Veröffentlichungsnummer: WO 2012/143554

(56) Entgegenhaltungen:
- EP-A2- 2 182 717
- WO-A2-2007/061632
- US-A1- 2005 254 726
- US-A1- 2007 035 650
- CHEN J., ZHOU G., ZHANG H., ZHANG H.: "Research and Development of Synchronous Controller in the Three-dimensional Measurement of Moving Object", PROCEEDINGS OF SPIE, Bd. 7820, 7. August 2010 (2010-08-07), XP040539013,

## Beschreibung

Die Erfindung bezieht sich auf ein Verfahren zur zeitlichen Abstimmung einer einen Bildsensor aufweisenden Kamera mit einem Projektor, wobei die Kamera zur Aufnahme einer Szene dient, der mittels des Projektors ein Muster überlagert ist, wobei der Projektor ein seiner Bildfrequenz F2 entsprechendes Synchronisationssignal erzeugen kann oder zwecks Synchronisation von Projektor und Kamera eine sonstige, ein Synchronisationssignal mit einer Frequenz F2 abgebende Einheit vorgesehen ist, bei dem
a) der Projektor mit der Bildfrequenz F2 betrieben und das Muster mit der Bildfrequenz F2 abgestrahlt wird,
b) die Kamera mit einer Bildfrequenz F1 betrieben wird und Bilder mit der Bildfrequenz F1 aufgenommen werden, wobei zwischen den einzelnen aufzunehmenden Bildern eine Austastlücke gebildet wird,
c) das Synchronisationssignal, mit dem der Projektor betrieben wird, zur Steuerung der Kamera bereitgestellt wird.

Zwecks Erstellung eines 3D-Bildes wird unter dem Terminus Technicus "Structured Light" die Anwendung einer Kamera mit einem Projektor verstanden. Hierbei wird mittels des Projektors der aufzunehmenden Szene ein Muster überlagert, aus dessen geometrischer Auswertung die 3D-Form der Szene ermittelt wird. Sowohl die Kamera bzw. der Bildsensor als auch der Projektor haben eine eigene Bildfrequenz F1, F2. Der Projektor strahlt das Muster mit der Bildfrequenz F2 ab, während die Kamera bzw. der Bildsensor die einzelnen Bilder mit der Bildfrequenz F1 aufnimmt, d. h. die Pixel des Bildsensors belichtet. Damit die geometrische Auswertung erfolgen kann, ist es wichtig, dass das jeweilige von der Kamera aufgenommene Bild über einen möglichst großen Teil der Belichtungszeit mit dem gewünschten Muster überlagert ist. Dies wiederum erfordert eine Synchronisation von Projektor und Kamera, sodass zumindest der Phasengang beider Frequenzen F1, F2 geregelt, mithin angeglichen ist. In diesem Fall sollten die beiden Frequenzen F1, F2 bestenfalls gleich groß sein. Wenn dies nicht der Fall ist, müssen die Frequenzen F1, F2 darüber hinaus entsprechend angeglichen werden. Erfüllt wäre die Bedingung gleichen Phasengangs jedoch auch, wenn sie zumindest in einem ganzzahligen Verhältnis zueinander stünden.

Bei dem Einsatz von Kameras spricht man im nicht synchronisierten Fall von "Freerunning", also Freilauf. In diesem Betriebsmodus können auch günstige Kameras eine Bildfrequenz von ca, 60 Hz bis zu 69 Hz leisten, wobei das an die Belichtung anschließende Auslesen eines Bildes während des Belichtens des darauf folgenden Bildes erfolgen kann.

Wenn man solche Kameras aber im getriggerten Betrieb einsetzt, sinkt die Bildfrequenz auf 20 Hz bis 30 Hz. Dies ist begründet in der Architektur des Prozessors, weil dieser zunächst die Belichtung und das daran anschließende Auslesen eines Bildes abarbeiten muss, bevor die nächste Belichtung möglich ist. Damit die ursprüngliche Frequenz behalten werden könnte, müsste der Prozessor die Trigger-Signale des Projektors ungeachtet des Auslaseprozesses synchron zum Belichten abarbeiten können, sog. Pipeline-Triggern. Prozessoren günstiger Kameras können dies jedoch nicht.

Kameras, die im synchronisierten Betrieb bspw. 60 Hz leisten können, die also einen Pipeline-Trigger-Modus aufweisen, sind um den Faktor 2 bis 3 teurer als die günstigen Kameras.

Aus dem Application Report "Using the DLP Pico 2.0 Kit for Structured Light Applications" von Texas Instruments ist bereits ein Verfahren zum synchronisierten Betrieb einer Kamera bekannt. Wie auf Seite 12 ersichtlich stellt der Projektor (Pattern) einen Synchronisationsimpuls (Sync Pulse) zur Verfügung. Der Synchronisationsimpuls weist eine variable Verzögerung (Sync Delay) auf. Dies ermöglicht es, den Startpunkt des Synchronisationsimpulses zu verändern. Somit können die Phasen beider Frequenzen synchronisiert werden. Dies setzt jedoch voraus, dass beide Frequenzen gleich groß sind oder in einem ganzzahligen Verhältnis zueinander stehen.

Aus der DE 696 28 956 T2 ist ein Verfahren zur Synchronisation der Aufzeichnung von Bildern durch eine Kamera und die Erzeugung von Daten, die die Position der Kamera festlegen, in einem System zum Abtasten eines Objektes und die Erzeugung von Daten, die Punkte im dreidimensionalen Raum festlegen, die den Punkten auf der Oberfläche des Objektes entsprechen, bekannt. Bei dem vorgenannten Verfahren ist eine Abtasteinrichtung vorgesehen, die zur Bewegung durch einen Bediener auf einem mehrgelenkigen Arm befestigt ist, über die das Objekt abgetastet werden kann und Daten von mehreren Punkten auf der Oberfläche des Objektes erfasst werden können, wobei die Abtasteinrichtung einen Laser zum Aussenden von Laserlicht auf die Oberfläche des Objektes sowie eine Kamera zur Erfassung des von der Oberfläche des Objektes reflektierten Laserlichts durch Aufzeichnen von Bildern zu Zeitpunkten, die von einem Synchronisationssignal festgelegt werden, aufweist, wobei das Verfahren folgende Schritte umfasst: das Empfangen des Synchronisationssignals für die Kamera, das deren Bildaufzeichnungszeitpunkte festlegt und daraufhin das Erzeugen und Ausgeben von Triggerimpulsen an die Positionsrechnungseinrichtung.

Aus der DE 10 2006 002 077 A1 ist eine Einrichtung zum dreidimensionalen optischen Vermessen von Objekten mit einem topometrischen Messverfahren bekannt, bei dem Bilder von auf ein Objekt projizierten Projektmustern aufgenommen und ausgewertet werden. Die Einrichtung hat einen Projektor mit einer Lichtquelle, eine Bildaufnahmeeinheit und eine Bildauswerteinheit. Die Lichtquelle des Projektors ist eine Lichtbogenlampe und die Bildaufnahmeeinheit wird in Abhängigkeit von der Lichtintensität der Lichtbogenlampe getriggert. Alternativ wird beschrieben, dass die Aufnahmeeinheit im nicht-getriggerten Modus, also im freilaufenden Modus, betrieben wird. In diesem Falle wird die Lichtbogenlampe bzw. deren Stromverlauf getriggert. WO2007/061632 A2 offenbart alle Merkmale des Oberbegriffs des Anspruchs 1.

US2007/0035650 A1 gehört zum Stand der Technik. Der Erfindung liegt die Aufgabe zugrunde, eine zeitliche Abstimmung einer Kamera mit einem Projektor derart auszubilden, dass eine möglichst hohe Bildfrequenz der Kamera gewährleistet wird.

Gelöst wird die Aufgabe erfindungsgemäß dadurch, dass zwecks Anpassung der Phase P1 der Bildfrequenz F1 der Kamera an die Phase P2 der Bildfrequenz F2 des Projektors und/oder zwecks Anpassung der Bildfrequenz F1 der Kamera an die Bildfrequenz F2 des Projektors die Länge einer oder mehrerer Austastlücken zwischen den einzelnen Bildern der Kamera in Abhängigkeit von dem Synchronisationssignal des Projektors variiert werden und hierzu durch einen Regelkreis ein Vergleich zwischen der Phase P1 der Bildfrequenz F1 der Kamera und der Phase P2 der Bildfrequenz F2 des Projektors und/oder zwischen der Bildfrequenz F1 der Kamera und der Bildfrequenz F2 des Projektors erfolgt, wobei ein Trigger-Eingang des Bildsensors hierfür nicht angesteuert wird und die Kamera im Freilaufmodus betrieben wird, sodass ein Belichten eines Bildes schon erfolgen kann, wenn das vorherige Bild noch ausgelesen wird und damit die maximale Bild-Frequenz möglich ist. Hierdurch wird erreicht, dass der Startpunkt der Belichtung der Kamera bzw. des Bildsensors mit dem Startpunkt der Projektion des Projektors synchron erfolgt, ohne dass die Kamera bzw. der Bildsensor im Pipeline-Trigger-Modus betrieben werden muss. Die Vorteile eines Pipeline-Trigger-Modus der Kamera werden sozusagen auf dem erfindungsgemäßen Weg nachgebildet. Die Austastlücke ist eine bislang soweit feste Größe, die von der Belichtungszeit und der angewendeten Kamerafrequenz abhängig ist und die das eine Bild von dem darauf folgenden Bild trennt. Im Trigger-Modus findet lediglich eine Veränderung der bzw. Anpassung der Pause zwischen den Startpunkten jeweils zwei aufeinander folgenden Bildern statt. Aber eine Anpassung bzw. Regelung der Austastlücke zwecks Anpassung der Frequenz F1 des Bildsensors bzw. dessen Phase P1 an die eines Projektors oder einer sonstigen, ein Synchronisationssignal abgebenden Einheit findet nicht statt.

Der Trigger-Eingang der Kamera kommt erfindungsgemäß nicht zur Anwendung, damit die Bildfrequenz der Kamera nicht beschränkt wird. Die Länge der Austastlücke wird in Abhängigkeit von dem Verhältnis beider Frequenzen F1 und F2 einerseits und/oder in Abhängigkeit von der Phasenlage zwischen beiden Frequenzen F1 und F2 eingestellt bzw. geregelt. Eine feste Einstellung der Länge der Austastlücke, bspw. um lediglich die Frequenz der Kamera für sich zu verändern, ist für das erfindungsgemäße Verfahren unzureichend. Die Frequenzen werden naturgemäß auseinander laufen. Ein Vergleich mit darauf folgender Abstimmung mit der Frequenz F2 des Projektors ist wichtig. Eine Angleichung der Phase der Frequenzen F1 und F2 durch eine feste Einstellung der Austastlücke ist für das erfindungsgemäße Verfahren ebenfalls unzureichend. Es bedarf einer sich wiederholenden Prüfung und Anpassung der Austastlücke zwecks Angleichung der beiden Phasen P1 und P2 im Rahmen eines Regelkreises.

Hierzu kann es vorteilhaft sein, wenn das Synchronisationssignal eine nahezu konstante Frequenz mit nur geringfügigen Schwankungen aufweist. Die Regelung der Frequenz F1 und der Phase P1 auf einen gewünschten, vom Synchronisationssignal vorgegebenen Soll-Wert kann dann ohne nachteilige Abweichung erfolgen, wenn das Synchronisationssignal streng periodisch ist. Ansonsten ist mit zu großen Abweichungen zwischen Soll- und Ist-Wert, also zwischen beiden Frequenzen F1 und F2 bzw. vor allem zwischen beiden Phasen P1 und P2, zu rechnen.

Vorteilhaft kann es hierzu auch sein, wenn in dem Fall, in dem die Phase P1 der Bildfrequenz F1 der Kamera gegenüber der Phase P2 der Bildfrequenz F2 des Projektors nach früh verschoben ist, die Austastlücken vergrößert werden und in dem Fall, in dem die Phase P1 der Bildfrequenz F1 der Kamera gegenüber der Phase P2 der Bildfrequenz F2 des Projektors nach spät verschoben ist, die Austastlücken verkleinert werden. Somit kann einer Abweichung der Phasen bzw. des Phasengangs begegnet werden, sodass im Mittel eine möglichst geringe Abweichung herrscht. Sobald bspw. die Phase P1 der Bildfrequenz F1 der Kamera gegenüber der Phase P2 der Bildfrequenz F2 des Projektors nach spät wegläuft, wird die Austastlücke so lange verkleinert, bis die beiden Phasenlagen wieder gleich sind. Entsprechendes gilt für ein Weglaufen nach früh.

Ferner kann es vorteilhaft sein, wenn in dem Fall, in dem die Bildfrequenz F1 der Kamera größer ist als die Bildfrequenz F2 des Projektors, die Austastlücken vergrößert werden und/oder in dem Fall, in dem die Bildfrequenz F1 der Kamera kleiner ist als die Bildfrequenz F2 des Projektors, die Austastlücken verkleinert werden. Die Bildfrequenz des Projektors und die der Kamera sind in der Regel nicht identisch, weil die Taktgeber wie Quarze keine identischen Frequenzen aufweisen. Zwecks Anpassung der Frequenzen kann insbesondere für den Fall, in dem die Bildfrequenz F1 der Kamera größer ist als die Bildfrequenz F2 des Projektors, erfindungsgemäß die Größe der Austastlücken so variiert werden, dass diese mit der Frequenz F2 des Projektors der Größe und der Phase nach möglichst übereinstimmt.

Vorteilhaft kann es auch sein, wenn eine Kamera zur Anwendung gebracht wird, deren Frequenz F1 im Vorfeld der zeitlichen Abstimmung größer ist als die Frequenz F2 des Projektors. Durch eine Vergrößerung der Austastlücke kann die Bildfrequenz F1 beliebig verkleinert werden. Im Gegensatz dazu ist eine Vergrößerung der Bildfrequenz F1 nur begrenzt möglich, weil die Austastlücke nicht beliebig verkleinerbar ist.

Dabei kann es von Vorteil sein, wenn das Synchronisationssignal vom Projektor über einen Elektronikbaustein, einen Schaltkreis, den Regelkreis oder einen IC erfasst wird und die Länge der Austastlücken über den Elektronikbaustein, den Schaltkreis oder den IC gesteuert und/oder geregelt wird. Der IC stellt dabei das Steuer- und Regelglied dar, da eine direkte Ankopplung der Kamera an das Synchronisationssignal zu einer Aktivierung des Pipeline-Modus und damit zu einer Verzögerung der Bildfrequenz der Kamera führen würde. Das Regelglied dient dem Abgleich zwischen Soll- und Ist-Wert, welche durch die anzunehmende Frequenz F2 bzw. Phase P2 einerseits und die zu synchronisierende Frequenz F1 bzw. Phase P1 der Kamera bzw. des Bildsensors abgebildet werden.

Im äquivalenten Fall kann es von Vorteil sein, wenn alternativ oder ergänzend zum Projektor eine weitere Kamera oder eine ein Synchronisationssignal abgebende Einheit Anwendung findet, an deren Frequenz F2 die Frequenz F1 und/oder die Phase P1 der Kamera angepasst wird. Somit ist das erfindungsgemäße Verfahren auch im Falle des Einsatzes einer weiteren Kamera oder ähnlichem als Trigger-Signal- bzw. Synchronisationssignal-Geber nutzbar, um zwei Kameras oder die eine Kamera bzw. den Bildsensor synchronisiert zu betreiben.

Das erfindungsgemäße System bietet die vorstehend genannten Vorteile.

Weitere Vorteile und Einzelheiten der Erfindung sind in den Patentansprüchen und in der Beschreibung erläutert und in den Figuren dargestellt. Es zeigt:
Figur 1 eine Schaltungsanordnung;
Figur 2 einen Frequenzgang;
Figur 3a Darstellung zum SdT;
Figur 3b eine detailliertere Darstellung der Erfindung.

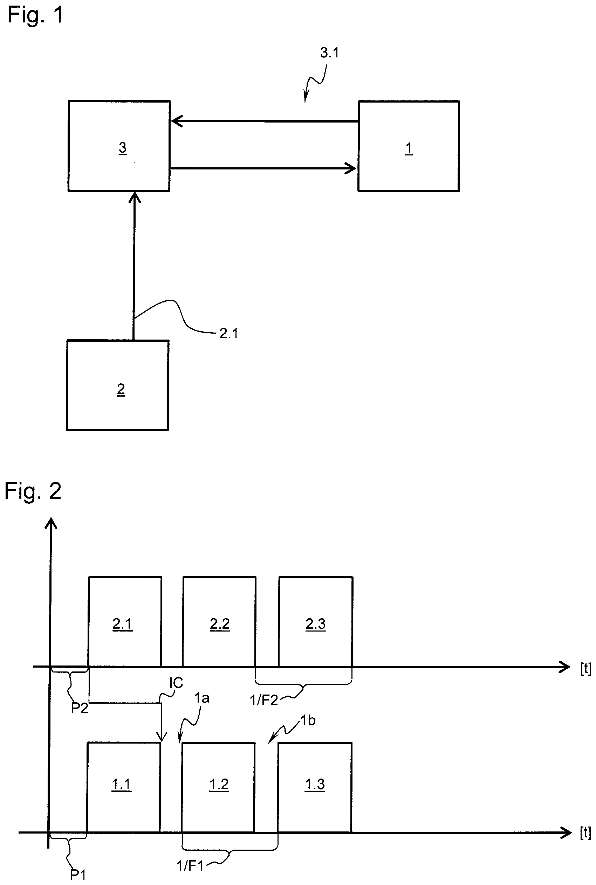

Nach Ausführungsbeispiel Figur 1 ist eine Kamera bzw. ein Bildsensor 1 über eine Elektronik 3 bzw. ein Steuer- und Regelglied wie einen IC 3 mit einem Projektor 2 oder einer weiteren Kamera bzw. mit einer ein Synchronisationssignal abgebende Einheit gekoppelt. Der Projektor 2 gibt ein Trigger-Signal 2.1 an den IC 3 ab. Der IC 3 nimmt über einen Regelkreis 3.1 Einfluss auf die Länge einer Austastlücke 1a, 1b zwischen einzelnen Bildern 1.1, 1.2, 1.3 der Kamera 1 derart, dass eine Frequenz F1 der Kamera 1 und eine Frequenz F2 des Projektors 2 der Größe nach einerseits und/oder der Phase nach andererseits möglichst wenig abweichen. Hierzu kommt es zu einem Vergleich zwischen der Frequenz F1 und der Frequenz F2 sowie der Phase P1 der Kamera 1 und der Phase P2 des Projektors 2. Dabei kann für die Phase und/oder für die Frequenz ein Abweichungswert A, wie bspw. A = P1 - P2 bzw. A = F1 - F2 definiert werden, der vorteilhafterweise mittels der Regelung nicht überschritten wird. Der vorstehend genannte Vergleich ist integraler Bestandteil jeder Regelung.

Nach Figur 2 weist der Projektor 2 eine Bildfrequenz F2 auf, in der er Muster 2.1, 2.2, 2.3 projiziert. Die Kamera 1 erfasst bzw. belichtet die Bilder 1.1, 1.2, 1.3 mit einer Bildfrequenz F1. Durch Veränderung der jeweiligen Austastlücke 1a, 1b über den IC 3 wird zum einen eine Phase P1, P2 der beiden Bildfrequenzen F1, F2 gleich gestellt bzw. die Phasenlage minimiert. Zum anderen werden die beiden Bildfrequenzen F1, F2 aneinander angepasst. Grundsätzlich sind zwischen den beiden Frequenzen ganzzahlige Faktoren denkbar. So könnte die Frequenz F2 des Projektors 2 doppelt so groß sein wie die Frequenz F1 der Kamera 1. In diesem Fall würde ein und dasselbe Bild 1.1 mit zwei aufeinander folgenden Mustern 2.1, 2.2 versehen sein. Im anderen Fall könnte die Frequenz F2 des Projektors 2 halb so groß sein wie die Frequenz F1 der Kamera 1. In diesem Fall würden jeweils zwei Bilder 1.1, 1.2 mit demselben Muster versehen sein.

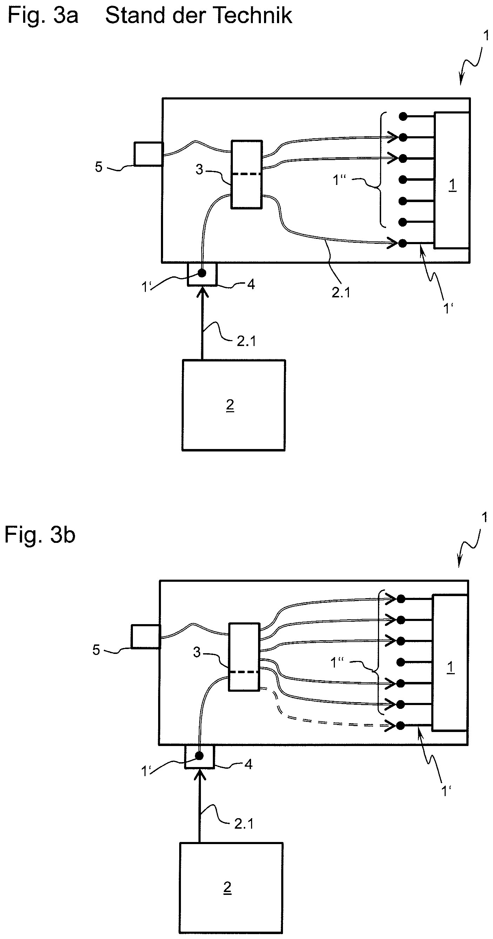

Nach Fig. 3a ist eine detailliertere Darstellung der Funktionsweise des Standes der Technik gezeigt. Die Kamera 1 bzw. der Bildsensor 1 weist einen Trigger-Eingang 1' auf, der ausgehend von einem Anschluss 4 eines Elektronikbausteins 3 mit dem Bildsensor 1 bzw. einer Steuerstelle 1'' des Bildsensors 1 verbunden ist. Die Steuerstelle 1'' bzw. der Steuer-Pin 1'' bildet den sog. Trigger-Pin 1'.

Darüber hinaus kann der Elektronikbaustein 3 mit weiteren Steuerstellen 1'' bzw. Steuer-Pins 1'' verbunden sein, über die der Benutzer die gewünschte Belichtungszeit und ggf. die Frequenz der Kamera bzw. des Bildsensors 1 einstellen kann. Letzteres erfolgt über eine weitere Schnittstelle 5, die mit weiteren Steuer-Stellen 1'' bzw. Steuer-Pins 1'' des Bildsensors 1 verbunden ist.

Zwecks Bilderstellung ist es erforderlich, dass zunächst die verschiedenen Bildpunkte bzw. Pixel des Bildsensors 1 belichtet werden und anschließend das Bild insgesamt ausgelesen wird. Hierfür braucht der Bildsensor 1 je nach gewünschter Belichtungszeit eine gewisse Zeit, bspw. 3 ms. Wenn der Anwender für die Kamera 1 eine Frequenz von bspw. 10 Hz (alle 100 ms ein Bild) gewählt hat, so verbleibt zwischen zwei aufeinander folgenden Bildern eine Pause bzw. Austastlücke von 97 ms. Abzüglich der Zeit für das Auslesen des Bildes, beispielsweise 1 ms, entsteht eine Austastlücke 1a von 96 ms. Wenn er nun bspw. die Belichtungszeit verdoppelt, so sind pro Bild 7 ms notwendig, sodass die Austastlücke 1a auf 93 ms schrumpft.

Kameras 1 bzw. Bildsensoren besserer Art können während des Auslesens des Bildes schon mit der Belichtung des nächsten Bildes beginnen, sodass mit Bezug auf das vorgenannte Beispiel die Austastlücke 1a auf 3 ms bzw. 6 ms anwächst.

Normale Kameras 1 bzw. Bildsensoren können im Freilauf eine höhere Bildfrequenz leisten als im Trigger-Modus. Hier sinken die Bildfrequenzen auf etwa die Hälfte. Kameras 1 bzw. Bildsensoren besserer Art können sowohl im Freilauf als auch im Trigger-Modus gleich hohe Bildfrequenzen leisten. Hier spricht man von Pipeline-Trigger-Modus

Aufgrund der Auswahl der Belichtungszeit findet bei der getriggerten Vorgehensweise nach dem Stand der Technik keine Veränderung der Austastlücke zwischen jeweils zwei aufeinander folgenden Bildern statt. Sobald der Trigger-Pin 1' mit einem Trigger-Signal 2.1 eines Projektors 2 beaufschlagt wird, erstellt der Bildsensor auf Grundlage der gewünschten Belichtungszeit ein Bild. Erst wenn dieser Vorgang abgeschlossen ist, d.h. Belichten und Auslesen des Bildes, ist der Bildsensor bzw. die Kamera 1 in der Lage, einen nächsten Impuls des Trigger-Signals 1.2 zu verarbeiten. Bis zum Erhalt dieses nächsten Impulses macht der Bildsensor nichts. Er befindet sich sozusagen im Standby-Modus. Damit ist der zeitliche Abstand zwischen zwei aufeinander folgenden Bildern zwar veränderbar. Eine Anpassung der Austastlücke erfolgt jedoch nicht.

Eine Anpassung bzw. Regelung der Austastlücke 1a, 1b zwecks Anpassung der Frequenz F1 des Bildsensors 1 bzw. dessen Phase P1 an die eines Projektors 2 oder einer sonstigen, ein Synchronisationssignal abgebenden Einheit findet nach dem Stand der Technik weder im Freilauf- noch im Trigger-Modus statt.

Nach Fig. 3b ist der Trigger-Pin 1' trotz Synchronisation mit einem Synchronisationssignal 2.1 erfindungsgemäß nicht in Kontakt mit dem Elektronikbaustein 3, zumindest wird der Trigger-Pin 1' - sofern mit dem Elektronikbaustein 3 kontaktiert - nicht mit einem Trigger-Signal 2.1 beaufschlagt. Über den als Steuer- und Regelglied 3 ausgebildeten Elektronikbaustein und die weiteren Steuer-Pins 1'' wird die Länge der Austastlücke 1a, 1b und die Frequenz F1 der Kamera ausgelesen. Somit kann die Frequenz F1 und/oder die Phase P1 des Bildsensors 1 mit der Frequenz F2 und/oder Phase P2 des Synchronisationssignals 2.1 verglichen und die Austastlücke 1a, 1b derart verändert werden, dass die Frequenz F1 und/oder die Phase P1 des Bildsensors 1 mit der Frequenz F2 und/oder der Phase P2 des Synchronisationssignals 2.1 übereinstimmt. Dabei kann die Kamera 1 im Freilauf betrieben werden, sodass ein Belichten eines Bildes schon erfolgen kann, wenn das vorherige Bild noch ausgelesen wird und damit die maximale Bild-Frequenz möglich ist. Ergänzend zu einem Trigger-Eingang 1' der Kamera könnte die Schnittstelle 5 als Synchronisations-Eingang 1' bezeichnet sein, sodass der Anwender schon beim Anschließen der Kamera zwischen Trigger-Modus und Synchronisationsmodus auswählen kann. Denn im Synchronisationsmodus ist es wichtig, dass die Frequenz und die Phase des Synchronisationssignals möglichst konstant sind, zumindest eine sehr geringe Abweichung aufweisen, da sonst die Einhaltung eines Soll-Wertes für die Phase P1 und die Frequenz F1 nicht möglich ist. Diese Anforderung ist an ein Trigger-Signal nicht zu stellen. Im Trigger-Modus kann die Kamera jede beliebige Trigger-Signal-Folge abbilden, sofern sie die maximal mögliche Bildfrequenz nicht überschreitet.

### Bezugszeichenliste

- 1: Kamera, Bildsensor
- 1': Trigger-Eingang, Trigger-Pin, Synchronisationseingang
- 1'': Steuer-Stelle, Steuer-Pin
- 1a: Austastlücke
- 1b: Austastlücke
- 1.1: Bild
- 1.2: Bild
- 1.3: Bild
- 2: Projektor, weitere Kamera, Synchronisationssignal abgebende Einheit
- 2.1: Trigger-Signal, Synchronisationssignal, Muster
- 2.2: Trigger-Signal, Synchronisationssignal, Muster
- 2.3: Trigger-Signal, Synchronisationssignal, Muster
- 3: Elektronik, Steuer- und Regelglied, IC
- 3.1: Regelkreis
- 4: Anschluss
- 5: Schnittstelle

- F1: Bildfrequenz der Kamera
- F2: Bildfrequenz des Projektors
- P1: Phase Kamera
- P2: Phase Projektor

## Patentansprüche

1. Verfahren zur zeitlichen Abstimmung einer einen Bildsensor aufweisenden Kamera (1) mit einem Projektor (2), wobei die Kamera (1) zur Aufnahme einer Szene dient, der mittels des Projektors (2) ein Muster überlagert ist, wobei der Projektor (2) ein seiner Bildfrequenz F2 entsprechendes Synchronisationssignal (2.1) erzeugen kann oder zwecks Synchronisation von Projektor (2) und Kamera (1) eine sonstige, ein Synchronisationssignal (2.1) mit einer Frequenz F2 abgebende Einheit vorgesehen ist, bei dem
a) der Projektor (2) mit der Bildfrequenz F2 betrieben und das Muster mit der Bildfrequenz F2 abgestrahlt wird,
b) die Kamera (1) mit einer Bildfrequenz F1 betrieben wird und Bilder mit der Bildfrequenz F1 aufgenommen werden, wobei zwischen den einzelnen aufzunehmenden Bildern (1.1, 1.2, 1.3) eine Austastlücke (1a, 1b) gebildet wird,
c) das Synchronisationssignal (2.1), mit dem der Projektor (2) betrieben wird, zur Steuerung der Kamera (1) bereitgestellt wird,
**dadurch gekennzeichnet, dass**
d) zwecks Anpassung einer Phase P1 der Bildfrequenz F1 der Kamera (1) an eine Phase P2 der Bildfrequenz F2 des Projektors (2) und/oder zwecks Anpassung der Bildfrequenz F1 der Kamera (1) an die Bildfrequenz F2 des Projektors (2) die Länge einer oder mehrerer Austastlücken (1a, 1b) zwischen den einzelnen aufzunehmenden Bildern (1.1 bis 1.3) der Kamera (1) in Abhängigkeit von dem Synchronisationssignal (2.1) des Projektors (2) variiert werden und hierzu durch einen Regelkreis (3.1) ein Vergleich zwischen der Phase P1 der Bildfrequenz F1 der Kamera (1) und der Phase P2 der Bildfrequenz F2 des Projektors (2) und/oder zwischen der Bildfrequenz F1 der Kamera (1) und der Bildfrequenz F2 des Projektors (2) erfolgt, wobei ein Trigger-Eingang des Bildsensors (1) für die Anpassung der Austastlücke (1a, 1b) nicht angesteuert wird und die Kamera (1) im Freilaufmodus betrieben wird, sodass ein Belichten eines Bildes schon erfolgen kann, wenn das vorherige Bild noch ausgelesen wird und damit die maximale Bild-Frequenz möglich ist.

2. Verfahren nach Anspruch 1,
**dadurch gekennzeichnet,**
**dass** das Synchronisationssignal (2.1) eine nahezu konstante Frequenz aufweist.

3. Verfahren nach Anspruch 1 oder 2,
**dadurch gekennzeichnet,**
**dass** in dem Fall, in dem die Phase P1 der Bildfrequenz F1 der Kamera (1) gegenüber der Phase P2 der Bildfrequenz F2 des Projektors (2) nach früh verschoben ist, die Austastlücken (1a, 1b) vergrößert werden und in dem Fall, in dem die Phase P1 der Bildfrequenz F1 der Kamera (1) gegenüber der Phase P2 der Bildfrequenz F2 des Projektors (2) nach spät verschoben ist, die Austastlücken (1a, 1b) verkleinert werden.

4. Verfahren nach Anspruch 1, 2 oder 3,
**dadurch gekennzeichnet,**
**dass** in dem Fall, in dem die Bildfrequenz F1 der Kamera (1) größer ist als die Bildfrequenz F2 des Projektors (2), die Austastlücken (1a, 1b) vergrößert werden und/oder in dem Fall, in dem die Bildfrequenz F1 der Kamera (1) kleiner ist als die Bildfrequenz F2 des Projektors (2), die Austastlücken (1a, 1b) verkleinert werden.

5. Verfahren nach einem der vorhergehenden Ansprüche,
**dadurch gekennzeichnet,**
**dass** eine Kamera (1) zur Anwendung gebracht wird, deren Frequenz F1 im Vorfeld der zeitlichen Abstimmung größer ist als die Frequenz F2 des Projektors (2).

6. Verfahren nach einem der vorhergehenden Ansprüche,
**dadurch gekennzeichnet,**
**dass** das Synchronisationssignal (2.1) vom Projektor (2) über einen Elektronikbaustein, einen Schaltkreis, den Regelkreis oder einen IC (3) erfasst und die Länge der Austastlücken (1a, 1b) über den Elektronikbaustein, den Schaltkreis, den Regelkreis oder den IC (3) gesteuert und/oder geregelt wird.

7. Verfahren nach einem der vorhergehenden Ansprüche,
**dadurch gekennzeichnet,**
**dass** alternativ oder ergänzend zum Projektor (2) eine weitere Kamera oder eine ein Synchronisationssignal abgebende Einheit Anwendung findet, an deren Frequenz F2 die Frequenz F1 und/oder die Phase P1 der Kamera (1) angepasst wird.

8. System zur Erzeugung von 3D-Bildern mit einer Kamera (1) und einem Projektor (2) oder einer weiteren Kamera (2), welches nach einem Verfahren nach einem der vorhergehenden Ansprüche betrieben wird.

## Claims

1. A method for synchronising a camera (1) having an image sensor with a projector (2), wherein the camera (1) serves for recording a scene which is superimposed with a pattern by means of the projector (2), wherein the projector (2) can generate a synchronisation signal (2.1) corresponding to its image refresh frequency F2 or, for the purpose of synchronising the projector (2) and the camera (1), another unit issuing a synchronisation signal (2.1) at a frequency F2 is provided, in which
a) the projector 2 is operated at the image refresh frequency F2 and the pattern is emitted at the image refresh frequency F2,
b) the camera (1) is operated at an image refresh frequency F1 and images are recorded at the image refresh frequency F1, wherein a blanking interval (1a, 1b) is formed between the individual images (1.1, 1.2, 1.3) to be recorded,
c) the synchronisation signal (2.1) with which the projector (2) is operated is provided for controlling the camera (1),
**characterized in that**
d) for adapting a phase P1 of the image refresh frequency F1 of the camera (1) to a phase P2 of the image refresh frequency F2 of the projector (2) and/or for adapting the image refresh frequency F1 of the camera (1) to the image refresh frequency F2 of the projector (2), the length of one or more blanking intervals (1a, 1b) between the individual images (1.1 to 1.3) of the camera (1) to be recorded are varied depending on the synchronisation signal (2.1) of the projector (2) and, to this end, a comparison between the phase P1 of the image refresh frequency F1 of the camera (1) and the phase P2 of the image refresh frequency F2 of the projector (2) and/or between the image refresh frequency F1 of the camera (1) and the image refresh frequency F2 of the projector (2) takes place by means of a closed-loop control circuit (3.1), wherein a trigger input of the image sensor (1) for adapting the blanking interval (1a, 1b) is not actuated and the camera (1) is operated in freerunning mode so that exposure of an image can already take place when the previous image is still being read out and therefore the maximum image refresh frequency is possible.

2. The method according to Claim 1,
**characterized in that**
the synchronisation signal (2.1) has a virtually constant frequency.

3. The method according to Claim 1 or 2,
**characterized in that**,
in the case in which the phase P1 of the image refresh frequency F1 of the camera (1) is shifted to early relative to the phase P2 of the image refresh frequency F2 of the projector (2), the blanking intervals (1a, 1b) are increased and, in the case in which the phase P1 of the image refresh frequency F1 of the camera (1) is shifted to late relative to the phase P2 of the image refresh frequency F2 of the camera (1), the blanking intervals (1a, 1b) are decreased.

4. The method according to Claim 1, 2 or 3,
**characterized in that**,
in the case in which the image refresh frequency F1 of the camera (1) is higher than the image refresh frequency F2 of the projector (2), the blanking intervals (1a, 1b) are increased and/or, in the case in which the image refresh frequency F1 of the camera (1) is lower than the image refresh frequency F2 of the projector (2), the blanking intervals (1a, 1b) are decreased.

5. The method according to any one of the preceding claims,
**characterized in that**
a camera (1) is used whereof the frequency F1 prior to the synchronisation is greater than the frequency F2 of the projector (2).

6. The method according to any one of the preceding claims,
**characterized in that**
the synchronisation signal (2.1) is detected by the projector (2) via an electronic component, a switching circuit, the closed-loop control circuit or an IC (3) and the length of the blanking intervals (1a, 1b) is controlled and/or regulated via the electronic component, the switching circuit, the closed-loop control circuit or the IC (3).

7. The method according to any one of the preceding claims,
**characterised in that**,
alternatively or additionally to the projector (2), a further camera or a unit emitting a synchronisation signal is used, the frequency F1 and/or the phase P1 of the camera (1) being adapted to the frequency F2 thereof.

8. A system for generating 3D images having a camera (1) and a projector (2) or a further camera (2), which is operated according to a method according to one of the preceding claims.

## Revendications

1. Procédé d'ajustement temporel d'une caméra (1) pourvue d'un capteur d'image avec un projecteur (2), ladite caméra (1) servant à l'enregistrement d'une scène à laquelle est superposé un motif au moyen du projecteur (2), ledit projecteur (2) pouvant générer un signal de synchronisation (2.1) correspondant à sa fréquence d'images F2 ou une autre unité émettant un signal de synchronisation (2.1) à une fréquence F2 étant prévue aux fins de synchronisation du projecteur (2) et de la caméra (1), où
a) le projecteur (2) est mis en service à la fréquence d'images F2 et le motif est diffusé à la fréquence d'images F2,
b) la caméra (1) est mise en service à une fréquence d'images F1 et des images sont enregistrées à la fréquence d'images F1, un intervalle de suppression (1a, 1b) étant formé entre les différentes images (1.1, 1.2, 1.3) à enregistrer,
c) le signal de synchronisation (2.1) avec lequel le projecteur (2) est mis en service est rendu disponible pour la commande de la caméra (1),
**caractérisé**
d) **en ce qu'**aux fins d'adaptation d'une phase P1 de la fréquence d'images F1 de la caméra (1) à une phase P2 de la fréquence d'images F2 du projecteur (2) et/ou aux fins d'adaptation de la fréquence d'images F1 de la caméra (1) à la fréquence d'images F2 du projecteur (2), la longueur d'un ou de plusieurs intervalles de suppression (1a, 1b) entre les différentes images (1.1 à 1.3) à enregistrer de la caméra (1) est variée en fonction du signal de synchronisation (2.1) du projecteur (2), et en ce qu'une comparaison entre la phase P1 de la fréquence d'images F1 de la caméra (1) et la phase P2 de la fréquence d'images F2 du projecteur (2) et/ou entre la fréquence d'images F1 de la caméra (1) et la fréquence d'images F2 du projecteur (2) est effectuée par une boucle d'asservissement (3.1) à cet effet, une entrée de déclencheur du capteur d'image (1) n'étant pas excitée pour l'adaptation de l'intervalle de suppression (1a, 1b) et la caméra (1) étant mise en service en marche à vide, si bien qu'une exposition d'une image peut déjà être exécutée quand l'image précédente est encore lue et que la fréquence d'images maximale est ainsi possible.

2. Procédé selon la revendication 1,
**caractérisé**
**en ce que** le signal de synchronisation (2.1) présente une fréquence pratiquement constante.

3. Procédé selon la revendication 1 ou la revendication 2,
**caractérisé**
**en ce que** les intervalles de suppression (1a, 1b) sont agrandis dans le cas où la phase P1 de la fréquence d'images F1 de la caméra (1) est avancée par rapport à la phase P2 de la fréquence d'images F2 du projecteur (2), et **en ce que** les intervalles de suppression (1a, 1b) sont diminués dans le cas où la phase P1 de la fréquence d'images F1 de la caméra (1) est retardée par rapport à la phase P2 de la fréquence d'images F2 du projecteur (2).

4. Procédé selon la revendication 1, la revendication 2 ou la revendication 3,
**caractérisé**
**en ce que** les intervalles de suppression (1a, 1b) sont agrandis dans le cas où la fréquence d'images F1 de la caméra (1) est supérieure à la fréquence d'images F2 du projecteur (2) et/ou **en ce que** les intervalles de suppression (1a, 1b) sont diminués dans le cas où la fréquence d'images F1 de la caméra (1) est inférieure à la fréquence d'images F2 du projecteur (2).

5. Procédé selon l'une quelconque des revendications précédentes,
**caractérisé**
**en ce qu'**une caméra (1) est utilisée, dont la fréquence F1 est supérieure à la fréquence F2 du projecteur (2).

6. Procédé selon l'une quelconque des revendications précédentes,
**caractérisé**
**en ce que** le signal de synchronisation (2.1) est détecté par le projecteur (2) au moyen d'un module électronique, d'un circuit, de la boucle d'asservissement ou d'un circuit imprimé (3) et **en ce que** la longueur des intervalles de suppression (1a, 1b) est commandée et/ou réglée au moyen du module électronique, du circuit, de la boucle d'asservissement ou du circuit imprimé (3).

7. Procédé selon l'une quelconque des revendications précédentes,
**caractérisé**
**en ce qu'**une autre caméra ou une unité émettant un signal de synchronisation sont utilisées de manière alternative ou complémentaire au projecteur (2), à la fréquence F2 desquelles est ajustée la fréquence F1 et/ou la phase P1 de la caméra (1)

8. Système pour la génération d'images 3D avec une caméra (1) et un projecteur (2) ou une autre caméra (2), mis en service avec un procédé selon l'une quelconque des revendications précédentes.
